# EUROPÄISCHE PATENTSCHRIFT

(11) **EP 3 081 431 B1**
(45) Veröffentlichungstag und Bekanntmachung des Hinweises auf die Patenterteilung: **08.07.2020**
(21) Anmeldenummer: 16164167.5
(22) Anmeldetag: 07.04.2016
(51) Int. Cl.: B60P 3/36, A47B 53/00

(54) **SCHRANKMÖBEL**
CUPBOARD
ARMOIRE

(30) Priorität: 16.04.2015 DE 202015101860 U
(43) Veröffentlichungstag der Anmeldung: 19.10.2016
(73) Patentinhaber: Niesmann & Bischoff GmbH, 56751 Polch (DE)
(72) Erfinder: ENGLER, Thomas, 56299 Ochtendung (DE)
(74) Vertreter: Waller, Stefan

(56) Entgegenhaltungen:
- DE-A1-102007 045 393
- DE-A1-102011 107 478
- US-A1- 2005 035 694
- US-B1- 6 464 142

## Beschreibung

Die Erfindung betrifft ein Schrankmöbel, insbesondere für ein Reisemobil und/oder einen Caravan.

In Reisemobilen und Caravans steht bekanntlich relativ wenig Platz zur Verfügung, so dass besonderen Wert auf eine möglichst gute Ausnutzung des Platzangebotes gelegt wird. Zur Verstauung von Gegenständen weisen Reisemobile bzw. Caravans üblicherweise diverse Staufächer auf. Diese sind bei bekannten Modellen ortsfest angeordnet und mit einer Klappe, einer Tür oder mit Schubkästen zu öffnen bzw. zu schließen. Durch den Öffnungswinkel der Klappe bzw. Tür sowie aufgrund der Ausladung der Schubkästen kann ggf. in besonderen Fällen der zur Verfügung stehende Raum nicht optimal genutzt werden.

Die US 6,464,142 B1 offenbart ein Lagersystem für bevorzugt pharmazeutische Artikel, welches jeden Artikel erfasst und dessen Lagerzeit aufzeichnet. In einer bevorzugten Aufführungsform wird ein Lagersystem gezeigt, wobei die Lagerplätze zu einer Zugangsöffnung rotierend, angeordnet sind.

Die US 2005/0035694 A1 offenbart ein Lagersystem mit einer Vielzahl von Schrankelementen, welche sich entlang einer Schienenanordnung verschieben lassen. Die Schrankelemente können über verschiedene Einschubelemente verfügen.

Die DE 10 2007 045 393 A1 offenbart einen Wohnanhänger oder ein Wohnmobil mit einem Drehschrank. Der Drehschrank lässt sich um eine vertikale Achse drehen und verfügt über eine starre Öffnung.

Der Erfindung liegt daher die Aufgabe zugrunde, ein Schrankmöbel zur Verfügung zu stellen, welches bei beengten Platzverhältnissen eine möglichst gute Zugänglichkeit ermöglicht und eine Vielzahl von Funktionen bereitstellt.

Die Aufgabe wird erfindungsgemäß gelöst durch ein Schrankmöbel mit den Merkmalen des Anspruchs 1. Bevorzugte Ausgestaltungen der Erfindung sind Gegenstand der abhängigen Ansprüche. Die Erfindung ist in der nachfolgenden Beschreibung, insbesondere im Zusammenhang mit den beiliegenden Figuren, näher erläutert.

Das erfindungsgemäße Schrankmöbel umfasst einen Korpus mit einer Mehrzahl von Funktionseinheiten, also mindestens zwei Funktionseinheiten, wobei mindestens eine Funktionseinheit ein Staufach ist oder umfasst und wobei eine Funktionseinheit zumindest eine Stufe oder eine Treppe aufweist. Desweiteren weist das Schrankmöbel eine Zugangsöffnung auf, über welche die Funktionseinheiten bedienbar bzw. zugänglich sind. Der Korpus, einschließlich der Funktionseinheiten, ist entlang der Zugangsöffnung derart verschiebbar, dass die Funktionseinheiten abwechselnd über die Zugangsöffnung bedienbar bzw. zugänglich sind.

Ein grundlegender Aspekt der Erfindung ist darin zu sehen, den Stauraum eines Schrankmöbels, gebildet durch mindestens ein Staufach, beweglich zu lagern, so dass die Entnahme von bzw. Bestückung mit Staugut über eine vorzugsweis feststehende (ortsfeste) Zugangsöffnung erfolgen kann. Die einzelnen Funktionseinheiten können wahlweise so angeordnet werden, dass sie in einer ersten Position über die Zugangsöffnung bedienbar bzw. zugänglich sind und in einer zweiten Position über die Zugangsöffnung nicht bedienbar bzw. nicht zugänglich sind. Die einzelnen bzw. unterschiedlichen (gleichartigen oder ungleichartigen) Funktionseinheiten sind also zwischen einer über die Zugangsöffnung zugänglichen Position und einer über die Zugangsöffnung nicht zugänglichen Position (unzugängliche Position) verschiebbar. Somit können die Funktionseinheiten abwechselnd vor die Zugangsöffnung geschoben werden, so dass sie bedient werden können. Die Breite des Korpus ist größer als die Breite der Zugangsöffnung.

Der Korpus des Schrankmöbels ist, vorzugsweise parallel, entlang der Zugangsöffnung verschiebbar gelagert, so dass die Funktionseinheiten bzw. das mindestens eine Staufach entlang der Zugangsöffnung bewegt werden kann. Auf diese Weise können die einzelnen Funktionseinheiten des Korpus selektiv bzw. abwechselnd bzw. alternativ vor die Zugangsöffnung geschoben werden, so dass diese zugänglich sind. Mindestens eine weitere Funktionseinheit ist hierbei vorzugsweise in einer Position neben bzw. abseits der Zugangsöffnung positionierbar, so dass diese Funktionseinheit über die Zugangsöffnung dann nicht zugänglich ist. Besonders bevorzugt ist es, dass die Funktionseinheiten jeweils einzeln an der Zugangsöffnung positionierbar sind.

Unter einer Funktionseinheit wird im Rahmen der vorliegenden Erfindung insbesondere ein abgeschlossener Bereich des Korpus verstanden, der eine definierte Funktionalität aufweist, beispielsweise eine Verstaumöglichkeit. Bei den Funktionseinheiten kann es sich insbesondere um Staufächer handeln, die grundsätzlich beliebig gestaltet sein können. Es ist möglich, dass sämtliche Funktionseinheiten Staufächer sind oder Staufächer aufweisen. Es können neben den Staufächern oder neben zumindest einem Staufach aber auch weitere (andere/andersartige) Funktionseinheiten vorgesehen sein. In einer bevorzugten Ausgestaltung der Erfindung weist der Korpus mindestens zwei Staufächer auf. Mit anderen Worten sind mindestens zwei der Funktionseinheiten Staufächer oder weisen mindestens zwei der Funktionseinheiten Staufächer auf.

Der Korpus ist relativ zu der Zugangsöffnung insbesondere derart verschiebbar, dass einzelne Funktionseinheiten in bzw. vor der Zugangsöffnung positioniert werden können (so dass sie zugänglich sind) und alternativ neben der Zugangsöffnung (so dass sie zumindest teilweise verdeckt bzw. unzugänglich sind).

Das erfindungsgemäße Schrankmöbel ermöglicht es somit, einen nicht direkt zugänglichen Raum optimal auszunutzen, indem ein dort angeordnetes Staufach bzw. eine dort angeordnete Funktionseinheit vor eine zugängliche Zugangsöffnung bewegt oder geschoben werden kann, um die Funktionseinheit zu bedienen. Somit können verbaute Hohlräume als Stauraum genutzt werden. Der Stauraum ist beweglich gelagert. Der Korpus ist vorzugsweise über ein Schienensystem geführt. Die Funktionseinheiten können von der Zugangsöffnung in einen unzugänglichen Bereich, beispielsweise hinter eine Blende oder hinter ein anderes Bauteil verfahren werden (beispielsweise hinter einen weiteren Schrank, hinter einen abgetrennten Raum, zum Beispiel eine Nasszelle, hinter ein Bett, etc.). Durch Verfahren zu der Zugangsöffnung bzw. Entnahmeöffnung liegt die entsprechende Funktionseinheit dann offen.

Das erfindungsgemäße Schrankmöbel kann aufgrund des verschiebbaren Korpus bzw. des mindestens einen verschiebbaren Staufachs auch als Schiebeschrank bezeichnet werden. Der Schiebeschrank ist insbesondere zur Anordnung in einem Caravan und/oder Reisemobil (Wohnwagen/Wohnmobil) vorgesehen. Der Korpus dient insbesondere zur Aufbewahrung von Staugut bzw. Waren, insbesondere von Haushaltsgut und/oder Bekleidung.

In einer bevorzugten Ausgestaltung der Erfindung ist vorgesehen, dass der Korpus parallel zu der Zugangsöffnung verschiebbar gelagert ist. Der Korpus wird also nicht aus der Zugangsöffnung heraus- bzw. durch die Zugangsöffnung hindurchbewegt, sondern entlang oder hinter der Zugangsöffnung verfahren.

Die Zugangsöffnung ist vorzugsweise unverschlossen oder unverschließbar. Vorzugsweise liegt die an die Zugangsöffnung verschobene Funktionseinheit direkt zugänglich vor. Die Zugangsöffnung, welche in einem vorzugsweise feststehenden Bauteil ausgebildet ist, ist bevorzugt also nicht durch eine Klappe, Tür oder dergleichen schließbar oder verschließbar.

Die Funktionseinheiten des Korpus sind bevorzugt zwischen einem über die Zugangsöffnung zugänglichen Bereich oder Raum (Bereich direkt angrenzend an die Zugangsöffnung) und einem zumindest nicht direkt zugänglichen Bereich oder Raum (Hohlraum; verbauter Raum; Raum hinter einem Bauteil, beispielsweise einer Blende; nicht direkt an die Zugangsöffnung angrenzender Bereich bzw. nicht direkt hinter der Zugangsöffnung liegender Bereich) verschiebbar. Die Funktionseinheiten sind also wahlweise zugänglich oder unzugänglich (verdeckt bzw. durch einen Anwender ggf. nicht sichtbar) positionierbar. Der Korpus weist vorzugsweise mindestens ein Staufach auf, das durch Verschieben des Korpus wahlweise a) vor der Zugangsöffnung und b) in einem zumindest nicht direkt zugänglichen Raum positionierbar ist. In dem nicht direkt zugänglichen Raum ist das Staufach bzw. die Funktionseinheit beispielsweise hinter einer Blende, hinter einem weiteren Schrank, hinter einem abgetrennten Raum (allgemein hinter einem Bauteil) angeordnet. Die Funktionseinheiten lassen sich insbesondere hinter einem Bauteil, vorzugsweise hinter einer Blende anordnen, wo sie vorzugsweise nicht sichtbar sind.

Der Korpus weist vorzugsweise mindestens zwei Funktionseinheiten, insbesondere zwei Staufächer, auf, die wahlweise (insbesondere nicht gleichzeitig) vor der Zugangsöffnung positionierbar sind. Die mindestens zwei wahlweise oder abwechselnd vor der Zugangsöffnung positionierbaren Funktionseinheiten bzw. Staufächer können durch Verschieben des Korpus in einer Verstauposition angeordnet werden, in welcher vorzugsweise beide Funktionseinheiten unzugänglich sind. In der Verstauposition sind die Funktionseinheiten vorzugsweise durch ein neben der Zugangsöffnung angeordnetes Bauteil verdeckt. In der Verstauposition ist keine Entnahme von Staugut bzw. Bestückung mit Staugut vorgesehen bzw. möglich. Das in der Verstauposition angeordnete Staufach ist also verschlossen. Die Staufächer oder Funktionseinheiten sind vorzugsweise derart zueinander beabstandet, dass sie in der Verstaubposition beidseitig der Zugangsöffnung angeordnet sind, also eine erste Funktionseinheit links der Zugangsöffnung und eine zweite Funktionseinheit rechts der Zugangsöffnung.

Die Funktionseinheiten des verschiebbaren Korpus können grundsätzlich beliebig gestaltet sein. Vorzugsweise umfasst oder ist zumindest eine der weiteren Funktionseinheiten, die wahlweise vor der Zugangsöffnung positionierbar ist, einen Spiegel und/oder eine Stufe und/oder eine Treppe und/oder ein Kühlfach und/oder einen Auszug bzw. ein Ausziehfach und/oder einen Mülleimer und/oder ein zur Zugangsöffnung hin offenes Regalfach. Zumindest eine der Funktionseinheiten kann mindestens ein Schubfach aufweisen, das ggf. durch die Zugangsöffnung hindurch bewegbar ist. Das Schubfach bzw. der Auszug kann auch entfernbar von dem Korpus ausgebildet sein. Das Schubfach bzw. der Auszug lässt sich vorzugsweise im eingebauten Zustand des Korpus vollständig entfernen und/oder demontieren.

Erfindungsgemäß ist vorgesehen, dass mindestens eines der Funktionseinheiten eine Stufe und/oder Treppe zum Betreten durch einen Anwender bildet oder aufweist, wobei die Stufe und/oder Treppe vorzugsweise wahlweise bzw. abwechselnd bzw. alternativ zugänglich oder unzugänglich positionierbar ist.

Grundsätzlich können verschiedenartige oder gleichartige Funktionseinheiten vorgesehen sein. Eine Breite der Funktionseinheiten entspricht vorzugsweise einer Breite der Zugangsöffnung. Vorzugsweise weisen alle Funktionseinheiten dieselbe Breite auf.

Die Zugangsöffnung erstreckt sich vorzugsweise entlang einer aufrechten, insbesondere vertikalen Ebene. In einer bevorzugten Ausgestaltung kann sich die Zugangsöffnung zusätzlich oder alternativ entlang einer liegenden, vorzugsweise horizontalen Ebene erstrecken. In diesem Fall kann die im Bereich der Zugangsöffnung positionierte Funktionseinheit von einer Vorderseite (vertikale Ebene, von vorne) und/oder einer Oberseite (horizontale Ebene, von oben) zugänglich bzw. bedienbar sein. Die Zugangsöffnung ist vorzugsweise umlaufend (ringsherum) durch ein oder mehrere Elemente bzw. Bauteile begrenzt und stellt also eine Durchgangsöffnung dar.

In einer besonders bevorzugten Ausgestaltung der Erfindung umfasst der Korpus mindestens zwei seitliche Staufächer und mindestens eine zwischen den seitlichen Staufächern angeordnete weitere, insbesondere andersartige Funktionseinheit, vorzugsweise eine Stufe und/oder eine Treppe. In einer zentralen Position des Korpus ist die weitere Funktionseinheit vorzugsweise fluchtend bzw. ausgerichtet zur Zugangsöffnung positioniert. Die beiden seitlichen Staufächer sind hierbei vorzugsweise neben der Zugangsöffnung angeordnet, so dass sie nicht frei zugänglich sind.

Vorzugsweise ist der Korpus in einer Grundposition arretierbar, so dass er nicht mehr frei beweglich ist. Die Arretierung kann beispielsweise mittels eines Schlosses, beispielsweise eines Druckschlosses, bewirkt werden. Die Grundposition des Korpus kann auch als Fahrposition bezeichnet werden, welche eingestellt wird, wenn der Caravan bzw. das Reisemobil in Bewegung gesetzt wird.

In einer weiteren bevorzugten Ausgestaltung der Erfindung ist ein mechanischer und/oder elektrischer Antrieb zum Verschieben des Korpus vorgesehen. Beispielsweise kann der Antrieb eine Kurbel und/oder einen Elektromotor aufweisen. Auch andere Antriebsformen sind grundsätzlich möglich.

Eine besonders vorteilhafte Anwendung der Erfindung ergibt sich, wenn der Korpus zumindest teilweise unterhalb eines Bettes angeordnet und dort verschiebbar gelagert ist. Auf diese Weise kann der Raum unterhalb des Bettes eines Caravans oder Reisemobils, welcher üblicherweise nur sehr begrenzt zugänglich ist, gut genutzt werden. Dabei kann sich die Zugangsöffnung beispielsweise in einem zentralen Bereich eines Stirnendes des Bettes, insbesondere unterhalb der Bettfläche, befinden.

Der Korpus kann für eine geführte Bewegung entlang einer Führungsschiene geführt sein. Die Schiene befindet sich vorzugsweise in einem rückwärtigen Bereich des Korpus, insbesondere oberhalb des Bodens und/oder entlang einer - vorzugsweise vertikalen - Wand. Vorzugsweise dient die Schiene lediglich der Führung des Korpus, ohne das vollständige Gewicht des Korpus aufzunehmen.

Der Korpus ist vorzugsweise auf Rollen gelagert, die mit Vorteil ungeführt auf einer Bodenfläche abrollen. Das Gewicht des Korpus, also insbesondere die Lasten des Staufaches bzw. der Staufächer, werden über die freilaufenden Rollen aufgefangen.

Die Erfindung wird nachfolgend anhand bevorzugter Ausführungsbeispiele welche in den beiliegenden, schematischen Figuren dargestellt sind, weiter beschrieben. In den Figuren zeigt:
- Fig. 1: ein erfindungsgemäßes Schrankmöbel in einer zentralen Position;
- Fig. 2: das Schrankmöbel gemäß Fig. 1 in einer linken Position;
- Fig. 3: das Schrankmöbel gemäß Fig. 1 in einer rechten Position und
- Fig. 4: eine Detailansicht eines erfindungsgemäßen Schrankmöbels mit einer Führungsschiene und Rollen.

Gleiche oder gleichwirkende Komponenten sind in sämtlichen Figuren mit denselben Bezugszeichen gekennzeichnet.

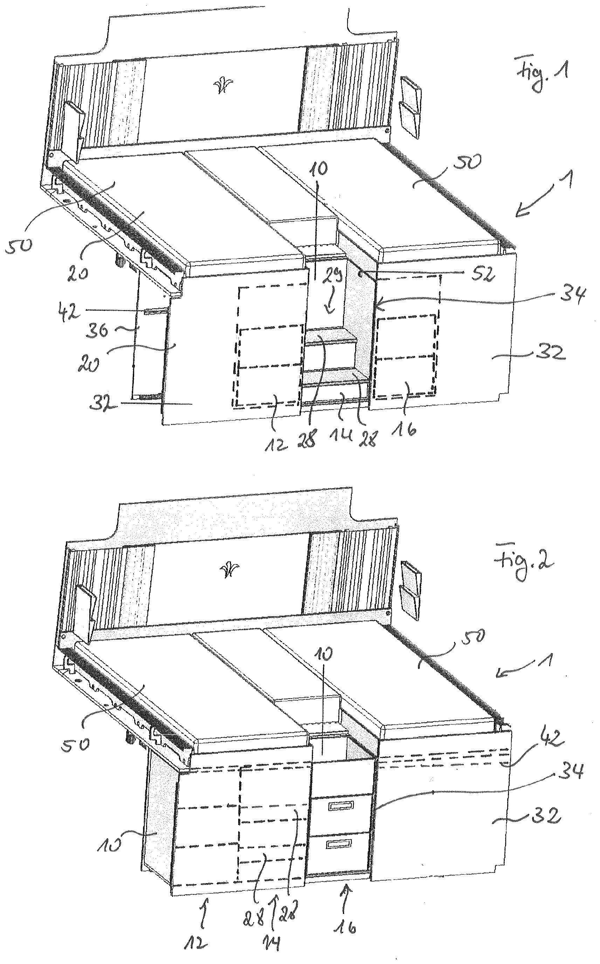

Die Figuren 1 bis 4 zeigen ein erfindungsgemäßes Schrankmöbel 1, welches unterhalb eines Bettes 50 angeordnet ist. Das Schrankmöbel 1, welches auch als Schiebeschrank oder einfach als Schrank bezeichnet werden kann, umfasst einen relativ zu einer feststehenden Basis 20 verschiebbar gelagerten Korpus 10. Die Basis 20 ist ortsfest relativ zu dem Bett 50 angeordnet oder kann auch als Teil des Bettes 50 angesehen werden. Der unterhalb des Bettes 50 angeordnete Korpus 10 umfasst mehrere Funktionseinheiten, in dem dargestellten Ausführungsbeispiel eine erste Funktionseinheit 12, eine zweite Funktionseinheit 14 und eine dritte Funktionseinheit 16. Unter einer Funktionseinheit wird hierbei ein abgeschlossener Bereich des Korpus 10 verstanden, welcher eine definierte Funktionalität aufweist. Die erste Funktionseinheit 12 und die dritte Funktionseinheit 16 umfassen jeweils mehrere Staufächer 22, welche beispielsweise durch Regalböden gebildet sein können. Die zweite Funktionseinheit 14 umfasst in der dargestellten Ausgestaltung der Erfindung mehrere Stufen oder Treppenstufen 28, welche insgesamt eine Treppe 29 bilden.

Im dargestellten Ausführungsbeispiel weisen die Staufächer 22 nach oben offene Kästen auf, die in einer horizontalen Richtung ausziehbar sein können. Ein oberes Staufach 22 weist einen vorzugsweise feststehenden, nach oben offenen Kasten 24 auf. Darunter sind ein oder mehrere Schubkästen oder Auszüge 26 vorgesehen.

In der feststehenden Basis 20, insbesondere zwischen zwei seitlichen Blenden 32, ist eine Zugangsöffnung 34 gebildet, die insbesondere als zentrale Zugangsöffnung 34 bezeichnet werden kann. Der Korpus 10 ist relativ zu der Basis 20 und relativ zu der Zugangsöffnung 34 in einer horizontalen Richtung bewegbar. Dabei sind die Funktionseinheiten 12, 14, 16 insbesondere beidseitig zu der (zentralen) Zugangsöffnung 34 positionierbar. Insbesondere ist es möglich, eine der Funktionseinheiten auf einer ersten Seite der Zugangsöffnung 34 und eine weitere Funktionseinheit auf einer zweiten (gegenüberliegenden) Seite der Zugangsöffnung 34 zu positionieren. Eine einzelne Funktionseinheit lässt sich gezielt zentriert zu der Zugangsöffnung 34 ausrichten bzw. anordnen. Vorzugsweise ist also jeweils eine einzelne Funktionseinheit zugänglich oder bedienbar. Die weiteren Funktionseinheiten können hierbei durch die Basis 20, beispielsweise durch eine der Blenden 32, verdeckt und unzugänglich sein. Der Korpus 10 lässt sich in einer seitlichen Richtung des Bettes 50 bewegen, insbesondere zwischen einem rechten und einem linken Bereich des Bettes 50. Die Zugangsöffnung 34 liegt in einem zentralen, insbesondere mittigen, Stirnbereich des Bettes 50.

Die Breite der einzelnen Funktionseinheiten 12, 14, 16 entspricht vorzugsweise der Breite der Zugangsöffnung 34, so dass sich jede Funktionseinheit gezielt bzw. einzeln vor der Zugangsöffnung 34 anordnen lässt.

Die Zugangsöffnung 34 erstreckt sich über einen horizontalen Bereich und einen vertikalen Bereich. Über den horizontalen Bereich der Zugangsöffnung 34 ist ein oberes Staufach, insbesondere der nach oben offene Kasten 34, zugänglich. Über den vertikalen Bereich der Zugangsöffnung 34 sind Regalfächer und/oder Schubkästen bzw. Auszüge 26 zugänglich.

In der Fig.1 befindet sich der Korpus 10 in einer zentralen Position, welche auch als Fahrposition bezeichnet werden kann. In dieser Position ist der Korpus 10 vorzugsweise arretierbar, so dass er bei Bedienung der Treppe bzw. bei einer Bewegung des Fahrzeugs nicht verrutscht. Zur Arretierung oder Immobilisierung des Korpus ist ein Schloss 52, insbesondere ein Druckschloss, vorgesehen.

Fig.2 zeigt den Korpus 10 in einer nach links verschobenen Position, so dass die rechte Funktionseinheit 16 ausgerichtet zur Zugangsöffnung 34 angeordnet ist und bedient werden kann. Beispielsweise lassen sich in dieser Position einzelne Auszüge 26 des Staufachs 22 durch die Zugangsöffnung 34 hindurch herausziehen. In der linken Position des Korpus 10 kann die dritte (rechte) Funktionseinheit 16 bzw. das rechte Staufach 22 über die Zugangsöffnung 34 bedient werden. Die weiteren Funktionseinheiten 12, 14 sind durch eine Blende 32 verdeckt und somit unzugänglich.

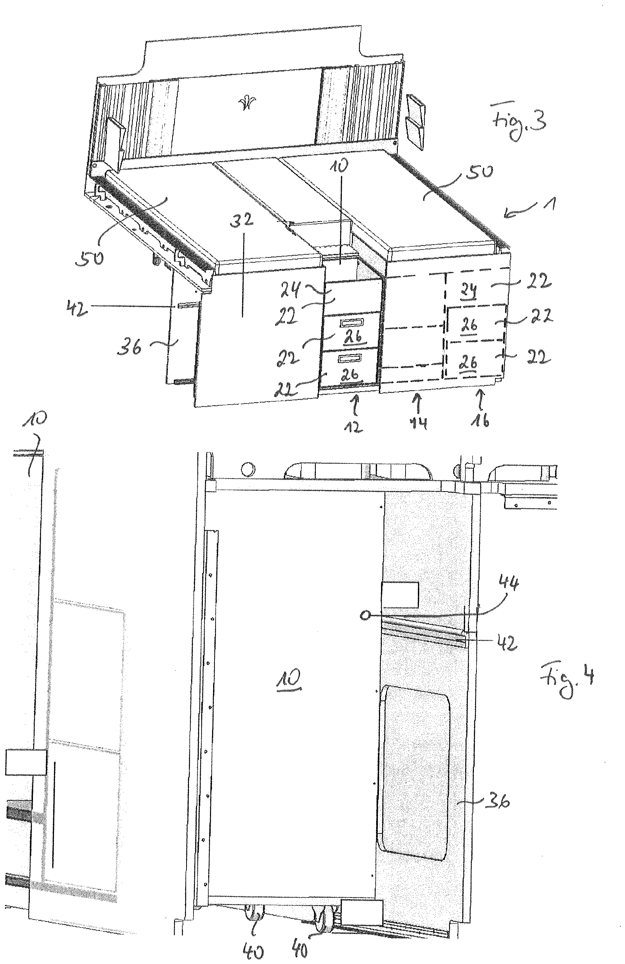

Fig. 3 zeigt den Korpus 10 in einer entsprechenden, nach rechts verschobenen Position. In der rechten Position des Korpus 10 kann die erste (linke) Funktionseinheit 12 bzw. das linke Staufach 22 über die Zugangsöffnung 34 bedient werden. Die weiteren Funktionseinheiten 14, 16 sind durch eine Blende 32 verdeckt und somit unzugänglich.

Der Korpus 10 ist über Rollen 40 abgestützt, die frei entlang einer Bodenfläche laufen und das Gewicht des Korpus 10 aufnehmen. Zur Führung des Korpus entlang der Zugangsöffnung 34 ist in einem rückwärtigen Bereich, insbesondere an einer rückwärtigen Wand 36 oder einem rückwärtigen Paneel der Basis 20, eine Führungsschiene 42 angeordnet, mit welcher der Korpus 10 in Eingriff ist. Der Korpus 10 kann hierzu ein Eingriffselement 44 oder Halter, beispielsweise einen Führungsschuh, zum Eingreifen in die Führungsschiene 32 aufweisen.

Insgesamt ermöglicht die Erfindung eine Ausnutzung von verbauten Hohlräumen, insbesondere eine Nutzung von Hohlräumen als Stauraum. Somit kann der verfügbare Raum in einem Wohnmobil besonders effizient genutzt werden.

## Patentansprüche

1. Schrankmöbel, aufweisend
einen Korpus (10) mit einer Mehrzahl von Funktionseinheiten (12, 14, 16) und
eine Zugangsöffnung (34), über welche die Funktionseinheiten (12, 14, 16) bedienbar sind,
wobei mindestens eine Funktionseinheit (12, 16) ein Staufach aufweist und wobei der Korpus (10) mit den Funktionseinheiten (12, 14, 16) entlang der Zugangsöffnung (34) derart verschiebbar gelagert ist, dass die Funktionseinheiten (12, 14, 16) abwechselnd über die Zugangsöffnung bedienbar sind, **dadurch gekennzeichnet, dass** eine Funktionseinheit (14) eine Stufe (28) und/oder eine Treppe (29) aufweist.

2. Schrankmöbel nach Anspruch 1,
wobei der Korpus (10) parallel zu der Zugangsöffnung (34) verschiebbar ist.

3. Schrankmöbel nach Anspruch 1 oder 2,
wobei die Zugangsöffnung (34) unverschlossen und/oder unverschließbar ist.

4. Schrankmöbel nach einem der Ansprüche 1 bis 3,
wobei die Funktionseinheiten (12, 14, 16) des Korpus (10) zwischen einem über die Zugangsöffnung (34) zugänglichen Bereich und einem zumindest nicht direkt zugänglichen Bereich verschiebbar sind.

5. Schrankmöbel nach einem der Ansprüche 1 bis 4,
wobei der Korpus (10) mindestens zwei Funktionseinheiten (12,16) aufweist, die wahlweise vor der Zugangsöffnung (34) positionierbar sind, und wobei die mindestens zwei wahlweise vor der Zugangsöffnung (34) positionierbaren Funktionseinheiten (12, 16) durch Verschieben des Korpus (10) in einer Verstauposition positionierbar sind, in welcher beide Funktionseinheiten (12, 16) unzugänglich sind.

6. Schrankmöbel nach einem der Ansprüche 1 bis 5,
wobei zumindest eine der Funktionseinheiten (12, 14, 16), die wahlweise vor der Zugangsöffnung (34) positionierbar ist, einen Spiegel und/oder ein Kühlfach und/oder einen Auszug (26) und/oder einen Mülleimer umfasst.

7. Schrankmöbel nach einem der Ansprüche 1 bis 6,
wobei der Korpus (10) mindestens zwei seitliche Staufächer (22) und mindestens einen zwischen den seitlichen Staufächern (22) angeordnete Stufe (28) und/oder Treppe (29) aufweist.

8. Schrankmöbel nach einem der Ansprüche 1 bis 7,
wobei der Korpus (10) zumindest teilweise unterhalb eines Bettes (50) angeordnet und verschiebbar gelagert ist.

9. Schrankmöbel nach einem der Ansprüche 1 bis 8,
wobei der Korpus (10) entlang einer Führungsschiene (42), welche vorzugsweise in einem rückwärtigen Bereich des Korpus (10) und/oder entlang einer vertikalen Wand (36) angeordnet ist, geführt ist.

10. Schrankmöbel nach einem der Ansprüche 1 bis 9,
wobei der Korpus (10) auf Rollen (40) gelagert ist, die ungeführt auf einer Bodenfläche abrollen.

## Claims

1. Cupboard having
a body (10) with a plurality of functional units (12, 14, 16)
and
an access opening (34) via which the functional units (12, 14, 16) can be operated,
wherein at least one functional unit (12, 16) has a storage compartment, and wherein the body (10) with the functional units (12, 14, 16) is mounted displaceably along the access opening (34) in such a way that the functional units (12, 14, 16) can be operated alternately via the access opening, **characterized in that** one functional unit (14) has a step (28) and/or stairs (29).

2. Cupboard according to Claim 1, wherein the body (10) is displaceable parallel to the access opening (34).

3. Cupboard according to Claim 1 or 2, wherein the access opening (34) is unclosed and/or unclosable.

4. Cupboard according to one of Claims 1 to 3, wherein the functional units (12, 14, 16) of the body (10) are displaceable between a region accessible via the access opening (34) and a region at least not directly accessible.

5. Cupboard according to one of Claims 1 to 4, wherein the body (10) has at least two functional units (12, 16) which can be positioned alternately in front of the access opening (34), and wherein the at least two functional units (12, 16) that can be positioned alternately in front of the access opening (34) can be positioned in a storage position by displacement of the body (10), in which storage position both functional units (12, 14) are inaccessible.

6. Cupboard according to one of Claims 1 to 5, wherein at least one of the functional units (12, 14, 16) that can be positioned alternately in front of the access opening (34) comprises a mirror and/or a freezer compartment and/or a drawer (26) and/or a bin.

7. Cupboard according to one of Claims 1 to 6, wherein the body (10) has at least two lateral storage compartments (22) and at least one step (28) and/or stairs (29) arranged between the lateral storage compartments (22).

8. Cupboard according to one of Claims 1 to 7, wherein the body (10) is arranged, and mounted displaceably, at least partially under a bed (50).

9. Cupboard according to one of Claims 1 to 8, wherein the body (10) is guided along a guide rail (42) which is preferably arranged in a rear region of the body (10) and/or along a vertical wall (36).

10. Cupboard according to one of Claims 1 to 9, wherein the body (10) is mounted on rollers (40) which roll unguided on a floor surface.

## Revendications

1. Meuble formant armoire, comprenant
un corps (10) pourvu d'une pluralité d'unités fonctionnelles (12, 14, 16) et
une ouverture d'accès (34) qui permet d'utiliser les unités fonctionnelles (12, 14, 16),
au moins une unité fonctionnelle (12, 16) comprenant un compartiment de rangement et le corps (10) étant monté de manière à pouvoir coulisser avec les unités fonctionnelles (12, 14, 16) le long de l'ouverture d'accès (34) de telle sorte que les unités fonctionnelles (12, 14, 16) puissent être utilisées alternativement par l'ouverture d'accès,
**caractérisé en ce qu'**une unité fonctionnelle (14) comporte une marche (28) et/ou un escalier (29).

2. Meuble formant armoire selon la revendication 1,
le corps (10) pouvant coulisser parallèlement à l'ouverture d'accès (34).

3. Meuble formant armoire selon la revendication 1 ou 2,
l'ouverture d'accès (34) n'étant pas fermée et/ou ne pouvant pas être fermée.

4. Meuble formant armoire selon l'une des revendications 1 à 3,
les unités fonctionnelles (12, 14, 16) du corps (10) pouvant coulisser entre une zone accessible par l'ouverture d'accès (34) et une zone au moins non directement accessible.

5. Meuble formant armoire selon l'une des revendications 1 à 4,
le corps (10) comportant au moins deux unités fonctionnelles (12, 16) qui pouvant éventuellement être positionnées devant l'ouverture d'accès (34), et les au moins deux unités fonctionnelles (12, 16), qui peuvent éventuellement être positionnées devant l'ouverture d'accès (34), peuvent être positionnées par coulissement du corps (10) dans une position de rangement dans laquelle les deux unités fonctionnelles (12, 16) ne sont pas accessibles.

6. Meuble formant armoire selon l'une des revendications 1 à 5,
l'une au moins des unités fonctionnelles (12, 14, 16), qui peut éventuellement être positionnée devant l'ouverture d'accès (34), comprenant un miroir et/ou un compartiment de réfrigération et/ou un tiroir (26) et/ou une poubelle.

7. Meuble formant armoire selon l'une des revendications 1 à 6,
le corps (10) comportant au moins deux compartiments de rangement latéraux (22) et au moins une marche (28) et/ou un escalier (29) disposés entre les compartiments de rangement latéraux (22).

8. Meuble formant armoire selon l'une des revendications 1 à 7,
le corps (10) étant disposé et monté de manière à pouvoir coulisser au moins partiellement au-dessous d'un lit (50).

9. Meuble formant armoire selon l'une des revendications 1 à 8,
le corps (10) étant guidé le long d'un rail de guidage (42) qui est de préférence disposé dans une région arrière du corps (10) et/ou le long d'une paroi verticale (36).

10. Meuble formant armoire selon l'une des revendications 1 à 9,
le corps (10) étant monté sur des rouleaux (40) qui roulent sans guidage sur une surface de sol.
